Europäisches Patentamt

European Patent Office

Office européen des brevets

(11) Veröffentlichungsnummer: **0 215 404**
**A1**

## (12) EUROPÄISCHE PATENTANMELDUNG

(21) Anmeldenummer: 86112355.2

(22) Anmeldetag: 06.09.86

(51) Int. Cl.⁴: **B23K 26/00**

(30) Priorität: 09.09.85 CH 3883/85

(43) Veröffentlichungstag der Anmeldung:
25.03.87 Patentblatt 87/13

(84) Benannte Vertragsstaaten:
CH DE FR GB IT LI

(71) Anmelder: **ELPATRONIC AG**
**Baarerstrasse 117**
**CH-6300 Zug(CH)**

(72) Erfinder: **Weil, Wolfgang**
**Hattsteinstrasse 3**
**D-7843 Heitersheim(DE)**

(74) Vertreter: **Hotz, Klaus, Dipl.-El.-Ing. / ETH**
**c/o SOUDRONIC AG Industriestrasse 35**
**Postfach 11**
**CH-8962 Bergdietikon(CH)**

(54) Zargenführung an einer Maschine zum Stumpfschweissen von Dosenzargen.

(57) Die Zargenführung (20) hat als äussere Führungselemente für die Dosenzargen (10) eine äussere Schiene (30) sowie mehrere Kränze von Kalibrierrollen (64), die radiale Führungskräfte auf die Dosenzargen (10) ausüben. Die äussere Schiene (30) hat eine Längsnut (34), in der eine Klinge (36) befestigt ist. An der Klinge (36) sind Führungsflächen (38, 40) ausgebildet, an denen die Längsränder (12, 14) der Dosenzargen entlanggleiten, wobei sie durch die Kalibrierrollen (64) zugleich an einer tangentialen Anlagefläche (32) der äusseren Schiene (30) anliegend gehalten sind. Dadurch werden die Längsränder (12, 14) dazu gebracht, nach dem Abgleiten von der Klinge (36) ohne radialen Versatz stumpf aneinanderzustossen.

Fig. 4

## Zargenführung an einer Maschine zum Stumpfschweissen von Dosenzargen

Die Erfindung betrifft eine Zargenführung an einer Maschine zum Stumpfschweissen der Längsränder gerundeter Dosenzargen, mit äusseren Führungselementen, die radiale Führungskräfte auf die Dosenzargen ausüben, und einem Paar Führungsflächen, die einer die Achse der Dosenzargen enthaltenden Mittelebene benachbart sind und an denen die Längsränder der sich zwischen den äusseren Führungselementen hindurchbewegenden Dosenzargen anliegend gehalten sind.

Bei einer bekannten Zargenführung dieser Gattung (EP-B-0 040 234) gehören zu den äusseren Führungselementen Rollenkränze, durch welche die Dosenzargen hindurchlaufen, und Teile einer sogenannten Z-Führung. Die Z-Führung weist eine tragende Schiene von Z-förmigem Profil auf, die einen ausserhalb der Dosenzargen parallel zu deren Achse verlaufenden äusseren Profilabschnitt, einen innerhalb der Dosenzargen, ebenfalls parallel zu deren Achse verlaufenden inneren Profilabschnitt und einen Steg aufweist, der beide Profilabschnitte einstückig miteinander verbindet. Am äusseren Profilabschnitt ist eine äussere Schiene befestigt, die zusammen mit dem inneren Profilabschnitt eine erste Längsnut begrenzt; in entsprechender Weise ist am inneren Profilabschnitt eine solche Schiene befestigt, die zusammen mit dem äusseren Profilabschnitt eine zweite Längsnut begrenzt. Die beiden Längsnuten sind durch den Steg voneinander getrennt und überlappen einander. Die Dosenzargen werden längs dieser Z-Führung derart bewegt, dass die beiden Längsränder jeder Dosenzarge in je einer der Längsnuten aufgenommen sind und die miteinander zu verschweissenden Kanten der Längsränder an den Nutgrundflächen entlanggleiten. Die in Bezug auf die Dosenzargen radiale Dicke des Steges zwischen den beiden Längsnuten wird in Bewegungsrichtung der Dosenzargen zunehmend kleiner, so dass die Längsränder, während sie vorbewegt werden, einander weiterhin überlappend gegeneinander konvergieren. Anschliessend werden die Längsränder gegen den radialen Druck der äusseren Führungsrollen auseinandergespreizt, damit sie sich schliesslich stumpf aneinanderlegen, um in dieser Lagen miteinander verschweisst zu werden, vorzugsweise mittels eines Lasers.

Es erweist sich jedoch als schwierig, wenn nicht unmöglich, die mit dieser bekannten Z-Führung einander überlappend zugeführten Längsränder der Dosenzargen durch das an - schliessende Auseinanderspreizen mit ausreichender Genauigkeit in die angestrebte Lage zu bringen. Im allgemeinen bleibt ein kleiner radialer Versatz der Längsränder in Bezug zueinander übrig, der auf dem Weg zur Schweissvorrichtung und auch von dieser selbst nicht beseitigt werden kann; darunter leidet zumindest das Aussehen, möglicherweise auch die Festigkeit und/oder Dichtigkeit der anschliessend hergestellten Schweissnaht.

Der Erfindung liegt deshalb die Aufgabe zugrunde, eine Zargenführung der eingangs beschriebenen Gattung derart weiterzubilden, dass sie noch bessere Voraussetzungen für eine einwandfreie Stumpfschweissung der Längsränder von Dosenzargen schafft.

Die Aufgabe ist erfindungsgemäss dadurch gelöst, dass die Führungsflächen von einer dünnen Klinge gebildet sind, an der die Längsränder der Dosenzargen durch die äusseren Führungselemente frei vom Radialversatz geführt sind.

Gemäss der Erfindung sind die Längsränder, sobald und solange sie die Klinge berühren, durch diese nur in Umfangsrichtung der Dosenzarge voneinander getrennt; die äusseren Führungselemente, wie immer sie im einzelnen beschaffen sein mögen, sind derart angeordnet, dass die Längsränder während ihres Entlanggleitens an der Klinge in radialer Richtung nicht gegeneinander versetzt sind.

Damit wird erreicht, dass die Längsränder der Dosenzargen bei ihrer Annäherung an die Schweisszone nicht radial gegeneinander sondern nur tangential zueinander hin verschoben werden. Infolgedessen werden die Dosenzargen sehr ruhig durch die Schweisszone geschoben. Die Klinge kann bis in unmittelbare Nähe der Schweisszone reichen, so dass die Dosenzargen sich nicht drehen können.

Die Klinge hat also die wesentliche Aufgabe, eine Verdrehung der Dosenzargen auf dem Weg zur Schweissvorrichtung zu verhindern, damit der von dieser ausgehende Laserstrahl oder sonstige gebündelte Energiestrahl genau auf die Stossfuge trifft, die von den stumpf aneinanderliegenden Längsrändern der Dosenzargen gebildet ist. Die von den äusseren Führungselementen auf die Dosenzargen ausgeübten, im wesentlichen radialen Kräfte belasten die Klinge nicht oder jedenfalls nicht nennenswert, da diese Kräfte miteinander im Gleichgewicht stehen. Die Klinge kann deshalb eine sehr geringe Dicke ungefähr in der Grössenordnung der Materialdicke der zu verschweissenden Dosenzargen haben.

Die erfindungsgemässe Klinge hat einen geringen Platzbedarf; sie kann so kleine Querschnittsabmessungen haben, dass sie sich für Dosenzargen von sehr kleinem Durchmesser eignet. Trotz der insgesamt geringen Dicke der Klinge ist es vorteilhaft, wenn die Klinge eine in Bewegungsrichtung der Dosenzargen abnehmende Dicke hat.

Die Erfindung baut zweckmässigerweise zusätzlich auf dem Merkmal der eingangs beschriebenen bekannten Zargenführung auf, dass zu den äusseren Führungselementen eine äussere Schiene gehört, die sich parallel zur Achse der Dosenzargen erstreckt. Dieses Merkmal ist erfindungsgemäss vorzugsweise dadurch weitergebildet, dass die äussere Schiene in Bezug auf den Umfang der Dosenzargen tangentiale Anlagefläche für beide Längsränder der Dosenzargen aufweist, und dass die Klinge auswechselbar in eine axiale Längsnut der äusseren Schiene eingesetzt ist. Die Anlagefläche dieser Schiene lässt sich vor dem Einsetzen der Klinge mit geringem Aufwand so bearbeiten, dass sie vollständig eben und, im Querschnitt gesehen, genau tangential zu den Dosenzargen verläuft und somit Gewähr dafür bietet, dass jeglicher Radialversatz der an dieser Anlagefläche anliegenden Längsränder der Dosenzargen ausgeschlossen ist. Die Klinge ist, auch wenn sie aus sehr hartem Werkstoff besteht, einem gewissen Verschleiss ausgesetzt und muss deshalb von Zeit zu Zeit ausgewechselt werden; dies ist bei der erfindungsgemässen Anordnung möglich, ohne dass die genannte äussere Schiene ausgebaut werden muss.

Es ist ferner zweckmässig, wenn die Erfindung auf dem weitern Merkmal der vorausgesetzten bekannten Zargenführung aufbaut, dass eine in Bezug auf die Dosenzargen innere Schiene sich parallel zur äusseren Schiene erstreckt. Dieses Merkmal ist erfindungsgemäss vorzugsweise dadurch weitergebildet, dass die innere Schiene eine axiale Längsnut aufweist, in welche die Klinge eingreift. Auf diese Weise lässt sich mit Sicherheit ausschliessen, dass zwischen der Klinge und der inneren Schiene ein Spalt freibleibt, in dem die Längsränder einer Dosenzarge bei besonders ungünstigen Betriebsbedingungen, beispielsweise Biegeschwingungen der Schiene, eingeklemmt werden könnten. Biegeschwingungen der Schienen können sich infolge des Eintauchens der erfindungsgemässen Klinge in die Längsnut der inneren Schiene nur in der Weise ausprägen, dass die beiden Schienen Relativschwingungen in der Ebene der Klinge ausführen; solche Schwingunge sind aber in der praktisch vorkommenden Grössenordnung -im Gegensatz zu Querschwingungen -ohne Einfluss auf die Qualität der Schweissnaht.

Entsprechendes gilt offensichtlich auch dann, wenn die Klinge in der Längsnut der inneren Schiene befestigt ist und lose in die Längsnut der äusseren Schiene eintaucht.

Besonders vorteilhaft ist es schliesslich, wenn die äussere und/oder die innere Schiene nahe dem in Bewegungsrichtung der Dosenzargen stromabwärtigen Ende ihrer Längsnut mit einer Kühlmittelleitung versehen ist.

Ausführungsbeispiel der Erfindung wird im folgenden anhand schematischer Zeichnungen mit weiteren Einzelheiten erläutert.

Es zeigt:

Fig. 1 die Draufsicht einer Maschine zum Stumpfschweissen der Längsränder gerundeter Dosenzargen,

Fig. 2 den senkrechten Schnitt II-II in Fig. 1,

Fig. 3 den waagerechten Teilschnitt III-III in Fig. 2,

Fig. 4 den senkrechten Querschnitt IV-IV in Fig. 2,

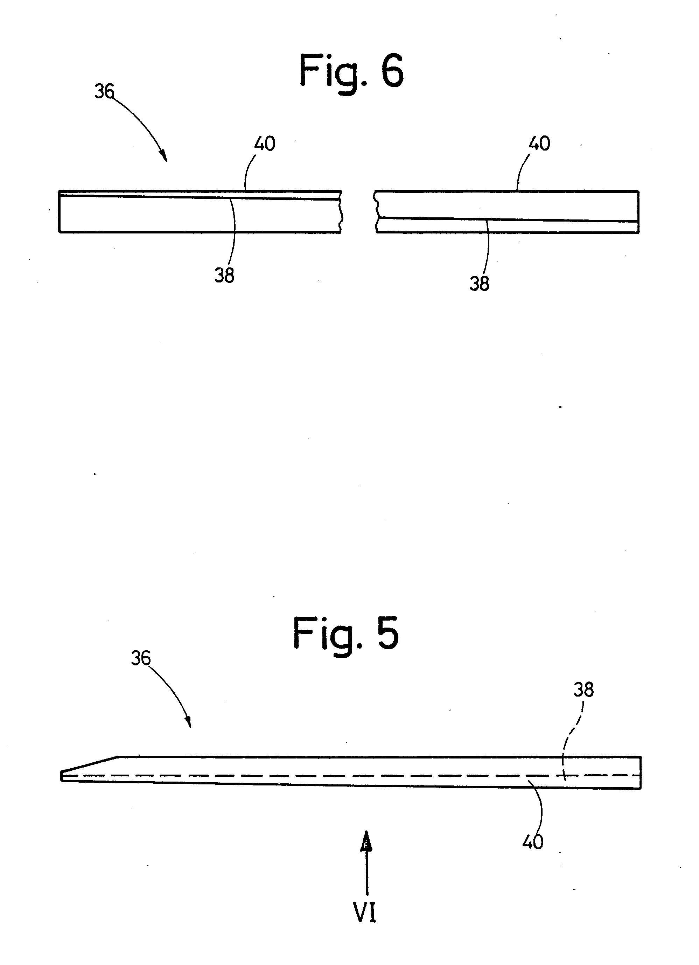

Fig. 5 eine Klinge in einer der Fig. 2 entsprechenden, jedoch vergrösserten Seitenansicht und

Fig. 6 die Untersicht der Klinge in Richtung des Pfeils VI in Fig. 5.

Die dargestellte Maschine hat die Aufgabe, Dosenzargen 10, die beispielsweise aus unbeschichtetem Stahlblech oder aus Weissblech bestehen können, an ihren Längsrändern 12 und 14 miteinander stumpf zu verschweissen. Die Dosenzargen 10 werden in üblicher Weise als ebene Blechzuschnitte stapelweise in einem Abstapler 16 eingesetzt, von diesem vereinzelt, anschliessend von einem Rundapparat 18 zylindrisch gerollt und danach axial über eine Zargenführung 20 einer Schweissvorrichtung 22 zugeführt, die beispielsweise mit einem Laserstrahl 24 die Längsränder 12 und 14 stumpf miteinander verschweisst.

Im folgenden wird vor allem die Zargenführung 20 beschrieben, die dafür sorgt, dass die Längsränder 12 und 14 der Dosenzargen 10 stumpf und ohne jeden radialen Versatz aneinanderliegend die Schweissvorrichtung 22 erreichen, und zwar derart, dass der Laserstrahl 24 genau auf die Stossfuge zwischen den Längsrändern trifft.

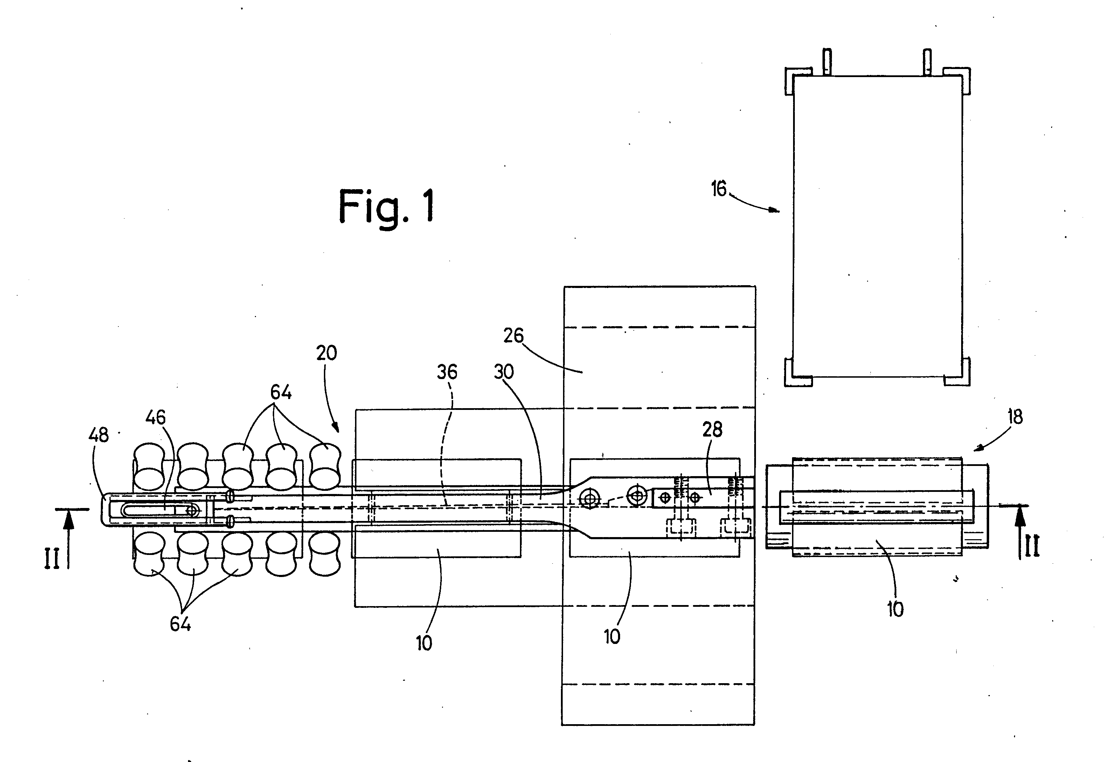

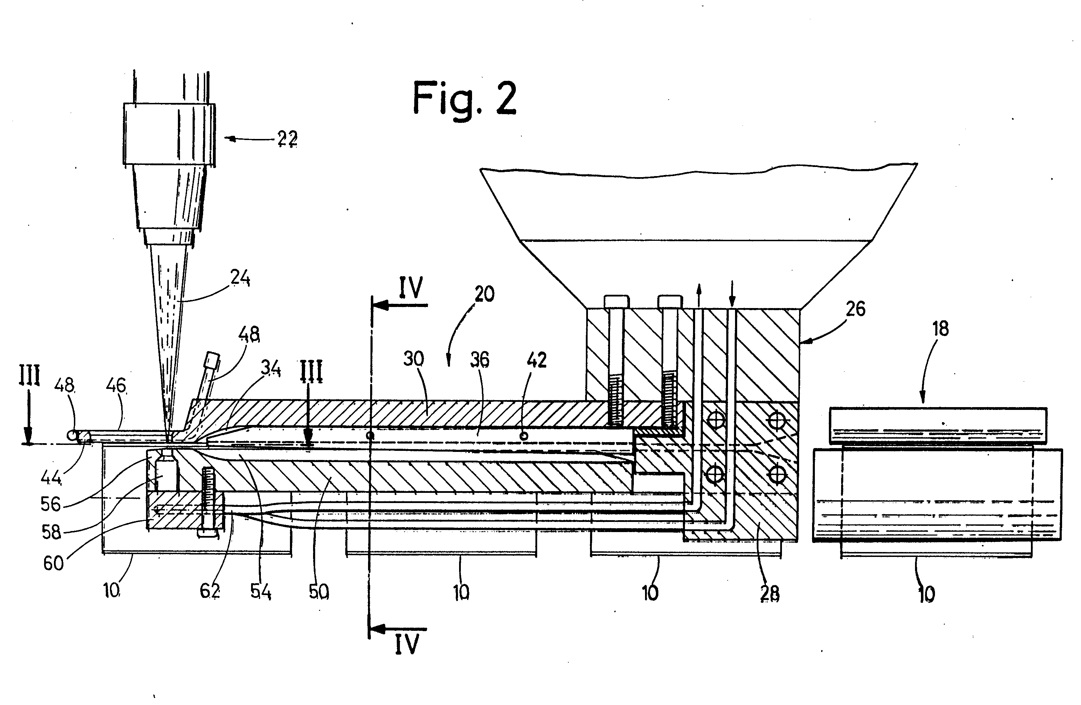

Gemäss Fig. 1 und 2 trägt ein Maschinengestell 26 eine senkrecht nach unten ragende Verbindungsplatte 28, an der eine in Bezug auf die Dosenzargen 10 radial äussere Schiene 30 befestigt ist. Die äussere Schiene 30 ist zu ihrer Befestigung gabelförmig gestaltet und umgreift die Verbindungsplatte 28, von der aus sie sich waagerecht in Bewegungsrichtung der Dosenzargen 10, parallel zu deren Achsen A, erstreckt. Die äussere Schiene 30 hat an ihrer Unterseite eine waagerechte, ebene Anlagefläche 32, die durch eine Längsnut 34 unterbrochen ist.

In die Längsnut 34 ist eine Klinge 36 eingesetzt, deren Seitenflächen Führungsflächen 38 und 40 für je einen Längsrand 12 bzw. 14 der Dosenzargen 10 bilden. Die Klinge 36 besteht aus gehärtetem, hochlegiertem Stahl von 1,0 mm Dicke; die Führungsflächen 38 und 40 sind so geschliffen, dass die zwischen ihnen übrigbleibende Dicke am bezüglich der Förderstroms der Dosenzargen 10 aufwärtigem Ende der 140 mm langen Klinge 0,75 mm beträgt und am anderen, in Fig. 1 und 2 linken Ende der Klinge nur noch 0,1 mm beträgt. Die Klinge 36 ist in der Längsnut 34 der äusseren Schiene 30 mittels geschlitzter federnder Hülsen 42, sogenannten Spannhülsen, leicht auswechselbar befestigt.

Die äussere Schiene 30 hat an ihrem freien Ende, in geringem Abstand förderstromabwärts vom Ende der Längsnut 34, einen abgeflachten Fortsatz 44 mit einem von oben nach unten durchgehenden Langloch 46, das mit der Klinge 36 fluchtet. Rings um den Fortsatz 44 erstreckt sich eine Kühlmittelleitung 48.

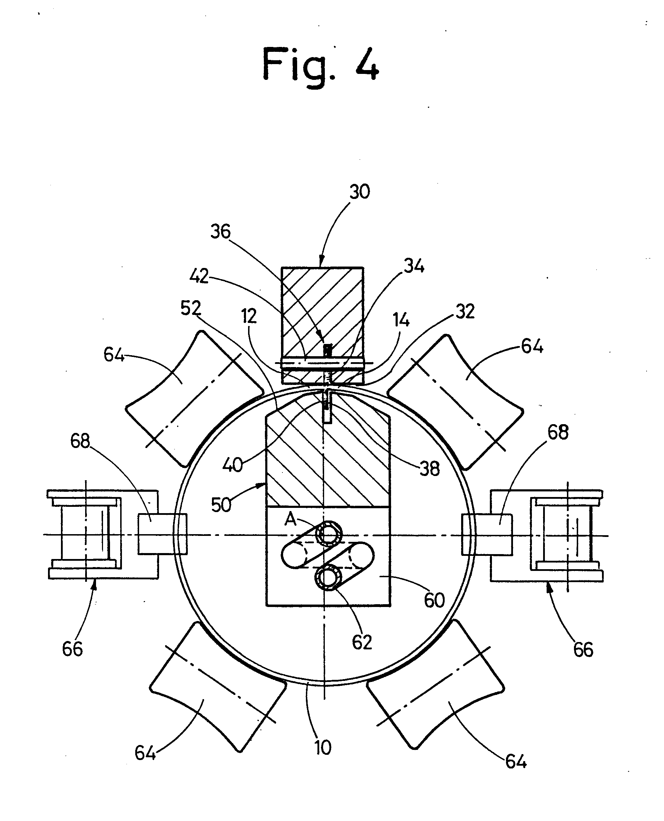

Im Abstand unterhalb von und parallel zu der äusseren Schiene 30 ist eine radial innere Schiene 50 angeordnet, die ebenfalls an der Verbindungsplatte 28 befestigt ist. Die innere Schiene 50 hat an ihrer Oberseite eine Begrenzungsfläche 52, die mit der Rundung der Dosenzargen 10 annähernd übereinstimmend konvex gewölbt ist. Diese Begrenzungsfläche 52 ist durch eine Längsnut 54 unterbrochen, in welche die Klinge 36 eingreift, wie vor allem aus Fig. 4 ersichtlich ist.

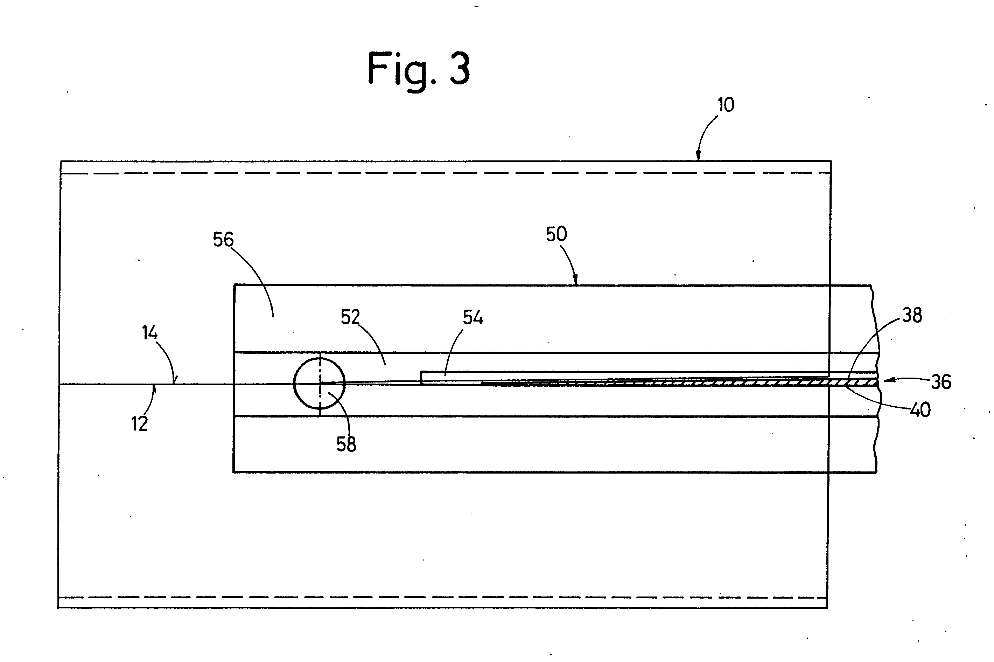

Am freien, förderstromabwärtigen Ende der inneren Schiene 50 ist gemäss Fig. 1 bis 3 ein verdickter Fortsatz 56 ausgebildet, der ein mit dem Laserstrahl 24 gleichachsiges, senkrechtes Loch 58 von kreisförmigem Querschnitt aufweist. An der Unterseite des Fortsatzes 56 ist ein Block 60 aus gut wärmeleitendem Werkstoff, beispielsweise Kupfer befestigt, in den eine Kühlmittelleitung 62 eingearbeitet ist. Die äussere Schiene 30 bildet mit ihrer Anlagefläche 32 ein radial äusseres Führungselement für die Dosenzargen 10. Als weitere radial äussere Führungselemente sind diaboloförmige Kalibrierrollen 64 vorgesehen, die in Kränzen von je vier solchen Rollen rings um die beiden Schienen 30 und 50 angeordnet sind. Die Kalibrierrollen 64 sind, wie üblich, derart federnd abgestützt, dass sie im wesentlichen radiale Führungskräfte auf die sich zwischen ihnen hindurch bewegenden Dosenzargen 10 ausüben und deren Randbereiche an der Anlagefläche 32 anliegend halten.

Der erwähnte Abstand zwischen der äusseren Schiene 30 und der inneren Schiene 50, also zwischen Anlagefläche 32 und Begrenzungsfläche 52 ist vorzugsweise genauso gross wie die Blechdicke der Dosenzargen 10. Wenn die Dosenzargen 10 nicht besonders abriebempfindlich sind, kann der Abstand zwischen den Fortsätzen 44 und 56 in unbelastetem Zustand der äusseren und inneren Schienen 30 und 50, etwas kleiner sein als die Blechdicke der Dosenzargen 10. In diesem Fall bewegen sich die äusseren und inneren Schienen 30 und 50 im Bereich ihrer Fortsätze 44 und 56 jeweils elastisch voneinander weg, wenn eine Dosenzarge 10 zwischen ihnen hindurchgeschoben wird.

Für die Bewegung der Dosenzargen 10 vom Rundapparat 18 zur Schweissvorrichtung 22 und darüberhinaus sind in üblicher Weise zwei parallele Förderketten 66 vorgesehen, an denen Mitnehmer 68 angeordnet sind.

## Ansprüche

1. Zargenführung an einer Maschine zum Stumpfschweissen der Längsränder (12, 14) gerundeter Dosenzargen (10), mit äusseren Führungselementen (30, 64), die radiale Führungskräfte auf die Dosenzargen (10) ausüben, und einem Paar Führungsflächen (38, 40) die einer die Achse (A) der Dosenzargen (10) enthaltenden Mittelebene benachbart sind und an denen die Längsränder (12, 14) der sich zwischen den äusseren Führungselementen (30, 64) hindurchbewegenden Dosenzargen (10) anliegend gehalten sind,

dadurch **gekennzeichnet**, dass die Führungsflächen (38, 40) von einer dünnen Klinge (36) gebildet sind, an der die Längsränder (12, 14) der Dosenzargen (10) durch die äusseren Führungselemente (30, 64) frei von Radialversatz geführt sind.

2. Zargenführung nach Anspruch 1,

dadruch **gekennzeichnet**, dass die Klinge (36) eine in Bewegungsrichtung der Dosenzargen (10) abnehmende Dicke hat.

3. Zargenführung nach Anspruch 1 oder 2, bei der zu den äusseren Führungselementen (30, 64) eine äussere Schiene (30) gehört, die sich parallel zur Achse (A) der Dosenzargen (10) erstreckt,

dadurch **gekennzeichnet**, dass die äussere Schiene (30) eine in Bezug auf den Umfang der Dosenzargen (10) tagentiale Anlagefläche (32) aufweist, und dass die Klinge (36) auswechselbar in eine Längsnut (34) der äusseren Schiene (30) eingesetzt ist.

4. Zargenführung nach Anspruch 3, mit einer in Bezug auf die Dosenzargen (10) inneren Schiene (50), die sich parallel zur äusseren Schiene (30) erstreckt,

dadurch **gekennzeichnet**, dass die innere Schiene (50) eine Längsnut (54) aufweist, in welche die Klinge (36) eingreift.

5. Zargenführung nach Anspruch 3 oder 4,

dadurch **gekennzeichnet**, dass die äussere und/oder die innere Schiene (30, 50) nahe dem in Bewegungsrichtung der Dosenzargen (10) stromabwärtigen Ende ihrer Längsnut (34, 54) mit einer Kühlmittelleitung (48, 62) versehen ist.

Fig. 1

# Fig. 2

0 215 404

# Fig. 3

0 215 404

# Fig. 4

Fig. 6

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | <u>DE - C - 969 360</u> (JOSEF WOLFF) <br><br> * Seite 3, Zeilen 48-58; <br> Fig. 2, Pos. p * <br><br> -- | 1,3,4 | B 23 K 26/00 |
| A | <u>US - A - 4 207 453</u> (ASTILL) <br><br> * Fig. 10, Pos. 172 * <br><br> -- | 1 | |
| A | <u>US - A - 4 354 090</u> (NILSEN) <br><br> * Fig. 6 * <br><br> ---- | | |

| RECHERCHIERTE SACHGEBIETE (Int. Cl 4) |
|---|
| B 23 K 9/00 |
| B 23 K 11/00 |
| B 23 K 26/00 |
| B 23 K 31/00 |

Der vorliegende Recherchenbericht wurde für alle Patentansprüche erstellt.

| Recherchenort | Abschlußdatum der Recherche | Prüfer |
|---|---|---|
| WIEN | 26-11-1986 | BENCZE |